# EUROPÄISCHE PATENTSCHRIFT

(11) **EP 2 574 525 B1**
(45) Veröffentlichungstag und Bekanntmachung des Hinweises auf die Patenterteilung: **24.02.2016**
(21) Anmeldenummer: 12186854.1
(22) Anmeldetag: 01.10.2012
(51) Int. Cl.: B62D 25/16

(54) **Kotflügel**
Mudguard
Aile

(30) Priorität: 30.09.2011 DE 202011051494 U
(43) Veröffentlichungstag der Anmeldung: 03.04.2013
(73) Patentinhaber: Alois Kober GmbH, 89359 Kötz (DE)
(72) Erfinder: Gerstberger, Edward, 89349 Burtenbach (DE); Spengler, Markus, 89335 Ichenhausen (DE); Fürstenberg, Michael, 89275 Thalfingen (DE); Starczewski, Thomas, 89081 Ulm (DE)
(74) Vertreter: Ernicke, Klaus Stefan

(56) Entgegenhaltungen:
- EP-A1- 0 433 794
- WO-A1-96/22215
- WO-A1-98/40241
- DE-A1-102006 002 289
- FR-A1- 2 868 032
- US-A- 5 171 037
- US-A- 5 816 616

## Beschreibung

Die Erfindung betrifft einen Kotflügel mit den Merkmalen im Oberbegriff des Hauptanspruchs.

In der Praxis ist es bekannt, Kotflügel, ein oder mehrere Fahrzeugräder überdeckend, seitlich an Fahrzeugen, insbesondere an LKW oder Anhängern, anzubringen. Die bisher bekannten Kotflügel sind nicht optimal ausgebildet.

Die US 5,816,616 A zeigt einen Anhänger mit Koflügeln, die jeweils einen Radhauskörper mit einer Oberseite und einer dortigen Vertiefung sowie einer anbauseitigen Wandung des Radhauskörpers seitlich neben der Oberseite aufweist. Die Vertiefung dient als Trittfläche, wobei der Radhauskörper an den Enden mit Trittstufen verbunden ist. Die Trittstufen dienen zur Befestigung am Anhängerchassis und haben vertikale Nuten zur Überdeckung eines Befestigungsbügels am Fahrzeugchassis.

Die FR 2868032 A1 zeigt einen ähnlichen Kotflügel mit einer Trittmulde an der Oberseite.

Aus der WO 96/22215 A1 ist ein anderer Kotflügel bekannt, der mehrteilig ausgebildet ist und an den Seitenbereich eingeformte Trittstufen aufweist.

Die EP 0 433 794 A1 befasst sich mit einem Kotflügel für die Hinterräder von Sattelzugmaschinen, der aus mehreren miteinander verbundenen Schalenelementen besteht. Das zentrale obere Schalenelement hat eine glattwandige Wölbung.

Es ist Aufgabe der vorliegenden Erfindung, einen verbesserten Kotflügel aufzuzeigen.

Ein erfindungsgemäßer Kotflügel weist einen Radhauskörper zur Überdeckung mindestens eines Fahrzeugrades auf. Der Radhauskörper kann seitlich an einem Fahrzeug angeordnet und beispielsweise an einer Außenwand oder einem Chassisträger oder an einem sonstigen dafür vorgesehenen Teil des Fahrzeugs befestigt werden. Der Kotflügel weist bevorzugt an einer oberen und über einem Fahrzeugrad befindlichen Seite des Radhauskörpers eine wannenartige Einbuchtung auf. Diese ist bevorzugt in horizontaler Erstreckung zur Anbauseite am Fahrzeug hin offen und zu den anderen Seiten hin durch einen im Querschnitt stufenförmigen Absatz begrenzt. Der stufenförmige Absatz verläuft in horizontaler Ebene bevorzugt in einer gebogenen Form.

Richtungs- und Bezugsangaben wie "horizontal", "vertikal" "oben" oder "unten" sind bezogen auf eine Anbaulage eines Kotflügels an einem auf horizontaler Ebene stehenden Fahrzeug bezogen, sodass der Kotflügel eine im Wesentlichen horizontal ausgerichtete Oberseite aufweist, die sich über dem zu überdeckenden Fahrzeugrad befindet. Diejenige Seite des Kotflügels, die beim Anbau zum Fahrzeug hin gerichtet ist, ist als "Anbauseite" bezeichnet. Sie steht im Wesentlichen quer zur Oberseite, also im Wesentlichen vertikal. Anders ausgedrückt verläuft die Anbauseite im Wesentlichen parallel zu einer Außenseite des Fahrzeugs. Die Anbauseite fällt mit dem Teil des Fahrzeugs, an dem der Kotflügel zu befestigen ist, in einer Anbauebene zusammen. Bei einer anderen Anbaulage eines Kotflügels sind die Richtungs- und Bezugsangaben entsprechend der geänderten Anbaulage zu verstehen.

Eine wannenartige Einbuchtung in der Oberseite des Radhauskörpers kann zur gezielten Versteifung und Kräfteführung dienen. Der die wannenförmige Einbuchtung umgebende stufenförmige Absatz kann bevorzugt derart ausgebildet sein, dass er in einer horizontalen Ebene von der Anbauseite her ausgehend über die obere und über dem Fahrzeugrad befindliche Seite des Radhauskörpers hinweg und zur Anbauseite zurück verläuft. Er kann dabei in horizontaler Erstreckung im Wesentlichen in gebogener Form und insbesondere halbringförmig verlaufen. Durch den stufenförmigen Absatz und die wannenförmige Einbuchtung kann die Verwindungsstabilität des Kotflügels verbessert werden. Der gebogene und insbesondere halbringförmige Verlauf des stufenförmigen Absatzes kann dazu dienen, Schub- und Scherspannungen in dem Radhauskörper im Bereich der Oberseite zu verteilen. Derartige Schub- und Scherspannungen können aus unterschiedlichen Belastungszuständen des Kotflügels entstehen.

Eine wannenartige Einbuchtung kann ferner dazu dienen, ein in der Form, insbesondere in Umriss und Tiefe angepasstes Einsatzelement aufzunehmen. Ein solches Einsatzelement kann in seiner Form mit der Form der wannenartigen Einbuchtung korrespondieren, sodass es sich in diese einlegen lässt. Derartige Einsatzelemente können beliebig ausgebildet sein. Sie können beispielsweise als Trittplatte oder als Deckplatte ausgeführt sein.Bei einem Fahrzeug, das im Winter oder in matschigem Terrain eingesetzt wird, können sich Materialanlagerungen innerhalb des Radhauskörpers bilden. Diese können ein erhebliches Gewicht haben und eine erhebliche und im Wesentlichen vertikal nach unten gerichtete Zugkraft auf den Radhauskörper auswirken. Andererseits können die Anlagerungen in ihrer Volumenausdehnung so groß werden, dass es zu einem schleifenden Kontakt zwischen einem Fahrzeugrad und den Anhäufungen kommt. Durch diesen schleifenden Kontakt können aus der Drehbewegung des Fahrzeugrades resultierende Schubkräfte über die Anhäufungen auf den Radhauskörper übertragen werden. Weiterhin kann es bei einem Einfedern eines Fahrzeugrades zu einer schleifenden Anlage und zu einer Stoßübertragung zwischen dem Fahrzeugrad und dem Radhauskörper kommen, wobei eine im Wesentlichen vertikale und nach oben gerichtete Stoßkraft auf den Kotflügel einwirken kann. Die genannten Belastungen können einzeln oder als Lastkollektiv auftreten. Daneben können weitere Lasten auftraten, die beispielsweise aus einem Winddruck auf den Kotflügel während der Fahrt oder einem Ausschlagen von hoch gewirbelten Steinen oder ähnliche resultieren.

Eine wannenartige Einbuchtung in der Oberseite eines Radhauskörper kann bevorzugt eine derartige flächige Ausdehnung haben, dass sie bei einem vollständigen Einfedern eines Fahrzeugrades die Kontaktzone zwischen dem Fahrzeugrad und dem Radhauskörper überlappt. Hierdurch kann eine definierte Anschleiffläche innerhalb des Radhauskörpers gebildet werden, die mit besonderen Verformungseigenschaften und ggfs. richtungsabhängigen Steifigkeiten ausgebildet ist.

Durch den gebogenen Verlauf des stufenförmigen Absatzes zwischen der wannenförmigen Einbuchtung und den angrenzenden Bereichen des Radhauskörpers kann im Bereich der Anschleiffläche ein in sich verhältnismäßig steifer Bereich geschaffen werden, über den die im Bereich der wannenförmigen Einbuchtung auftretenden Lasten in definierter Weise auf die restlichen Bereiche des Radhauskörpers übertragen werden können. Der stufenförmige Absatz kann in Längsrichtung seines gebogenen Verlaufs insbesondere eine erhöhte Steifigkeit und/oder Zugfestigkeit schaffen, wodurch ein ggfs. durch Lastspitzen hervorgerufenes Überdehnen und/oder Aufreißen des Radhauskörpers im Bereich der Oberseite vermieden werden kann.

Der Radhauskörper kann an seiner Oberseite ein oder mehrere Erhebungen oder Vertiefungen aufweisen. Diese können insbesondere als Versteifungselemente ausgebildet sein. Sie können insbesondere bevorzugt als längliche und in Richtung der Umfangsdrehung eines Fahrzeugrades ausgerichtete Sicken ausgebildet sein. Alternativ können die Versteifungselemente in beliebiger anderer Weise ausgebildet sein. Die Erhebungen oder Vertiefungen können durch ihre Formgebung einen eigenen Versteifungseffekt hervorrufen. Alternativ können die Erhebungen oder Vertiefungen in Zusammenwirkung mit anderen Erhebungen oder Vertiefungen an einem Einsatzelement zusammenwirken und so einen gemeinsamen Versteifungseffekt bewirken. Alternativ oder zusätzlich können die Erhebungen oder Vertiefungen eine Positionierwirkung für ein Einsatzelement haben. Im Weiteren wird repräsentativ für derartige Erhebungen und Vertiefungen der Begriff Versteifungselement verwendet.

Durch derartige Versteifungselemente kann dem Radhauskörper eine definierte Verformungsneigung eingeprägt werden. Insbesondere kann das Verformungsverhalten des Radhauskörpers für bestimmte Lastzustände in definierter Weise vorgegeben werden. Die länglich ausgebildeten Sicken führen in ihrer Längsrichtung und somit bevorzugt in der Richtung der Umfangsdrehung eines Fahrzeugrades zu einer Versteifung. Quer dazu ermöglichen sie hingegen eine elastische Verformbarkeit und insbesondere ein Auswölben. Das Auswölben kann beispielsweise vorteilhaft für eine Ausweichbewegung des Radhauskörpers bei einem vollständigen Einfedern des Fahrzeugrades sein.

Die vorgenannten Erhebungen und Vertiefungen, insbesondere Versteifungselemente, können alternativ oder zusätzlich zu der Ausbildung einer wannenförmigen Einbuchtung in der Oberseite des Radhauskörpers vorgesehen sein. Sie können insbesondere eine wannenförmige Einbuchtung überziehen. Weiterhin können Versteifungselemente im Bereich der wannenförmigen Einbuchtung ggfs. in zusätzliche Versteifungselemente übergehen, die in der Oberseite des Radhauskörpers und in den an die wannenförmige Einbuchtung angrenzenden Bereichen angeordnet sind. Auf diese Weise kann eine Längsversteifung gebildet werden, durch die eine bevorzugte Kraft- und Spannungsverteilung in Längsrichtung des Radkörpers, d.h. in Längsrichtung des Fahrzeugs bzw. in Umlaufdrehrichtung eines Fahrzeugrads, gebildet wird. Zug- oder Stoßkräfte, die in einem Bereich in Fahrtrichtung vor oder hinter einem Fahrzeugrad auf den Radhauskörper einwirken, können somit gezielt über den Umfang des Radhauskörpers verteilt werden.

Der Radhauskörper kann bevorzugt aus einem elastischen und zugfesten Material mit einer im Wesentlichen gleichmäßigen Wandstärke ausgebildet sein. Er kann beispielsweise als Blechteil oder als Kunststoffteil in einem Umformverfahren oder Urformverfahren gebildet sein. Er kann insbesondere bevorzugt mittels Tiefziehen oder Spritzgießen gefertigt und/oder aus PP-EPDM oder einem korrosionsbeständigen Stahl- oder Aluminiumwerkstoff gebildet sein. Die Ausbildung des Radhauskörpers mit einer im Wesentlichen gleichmäßigen Wandstärke führt in Kombination mit einer wannenförmigen Einbuchtung und/oder Versteifungselementen in der Oberseite des Radhauskörpers zu einer besonders kostengünstigen und gleichzeitig hoch belastbaren Ausführung.

Der Radhauskörper kann bevorzugt im Bereich einer anbauseitigen Wandung des Radhauskörpers, d.h. im Bereich der Seite, mit der der Radhauskörper an einem Fahrzeug anliegend befestigt wird, einen stufenförmigen Bereich aufweisen, der eine Aussparung bildet. Der stufenförmige Bereich kann dabei bevorzugt von einer Kante zwischen der Oberseite und der Anbauseite des Radhauskörpers ausgehen und sich nach unten hin über einen Teil der Anbauseite erstrecken, wobei er eine nach oben hin offene Aussparung gegenüber der Anbauebene bildet. Im Bereich der Aussparung kann die anbauseitige Wandung des Radhauskörpers gegenüber der Anbauebene bevorzugt parallel zurückversetzt sein, so dass die Aussparung eine schlitzartige Form hat. Die Aussparung kann alternativ oder zusätzlich zu der wannenförmigen Einbuchtung in der Oberseite des Radhauskörpers vorgesehen sein.

Der Radhauskörper kann bevorzugt derart ausgebildet sein, dass im Bereich der Oberseite ein in Form und Größe korrespondierendes Einsatzelement ein- oder aufsetzbar ist. Ein solches Einsatzelement kann beispielsweise ein Trittelement, insbesondere eine Trittplatte, oder eine Deckplatte sein. Das Einsatzelement kann bevorzugt ein ebenes oder leicht gewölbtes Flächenelement aufweisen, das mit der wannenförmigen Einbuchtung in der Oberseite des Radhauskörpers und insbesondere mit dem stufenförmigen Absatz in teilweiser oder vollständiger Konturenergänzung korrespondiert. Unter Konturenergänzung ist hierbei zu verstehen, dass zwei einander entsprechende Außenkonturen an Radhauskörper und Einsatzelement derart korrespondierend geformt sind, dass sie sich bei einem Einsetzen des Einsatzelementes in den Radhauskörper unter Beachtung angemessener Toleranzen über größere Längen oder Flächenbereiche kontaktieren. Anders ausgedrückt meint eine Konturenergänzung eine komplementäre räumliche Formgebung im Bereich einer Kontaktzone zwischen einem Radhauskörper und einem Einsatzelement. Die Konturenergänzung kann hierbei vollständig sein, also eine gesamte Wirklänge oder Wirkfläche überdecken, oder teilweise sein und so bspw. nur im Bereich erhöhter lokaler Belastungsbereiche vorgesehen sein.

Ein Einsatzelement kann alternativ oder zusätzlich zu der vorgenannten Ausbildung des Flächenelementes an seiner Unterseite Erhebungen oder Vertiefungen aufweisen, die im Folgenden vereinfachend als Versteifungselement bezeichnet sind. Diese Versteifungselemente können als längliche Versteifungsrippen ausgebildet sein und bevorzugt in Form und Anordnung mit Versteifungselementen in der Oberseite des Radhauskörpers korrespondieren. Insbesondere können die Versteifungselemente an der Unterseite des Einsatzelementes in teilweiser oder vollständiger Konturenergänzung mit Versteifungselementen in der Oberseite des Radhauskörpers übereinstimmen. Alternativ können an der Unterseite eines Einsatzelementes Erhebungen oder Vertiefungen ohne eigene Versteifungswirkung angeordnet sein, die mit komplementären Vertiefungen oder Erhebungen in der Oberseite eines Radhauskörpers korrespondieren.

Ein Einsatzelement mit den genannten Erhebungen oder Vertiefungen, insbesondere mit den genannten Versteifungselementen, kann eine zusätzliche Versteifung des Kotflügels bewirken. Alternativ oder zusätzlich kann es als schützende Abdeckung für die Oberseite des Radhauskörpers dienen, um beispielsweise die Bildung von Wasseransammlungen zu vermeiden, die im Winter zu einer Frostbeschädigung führen könnten.

Weiterhin kann ein Einsatzelement eine bedruckbare oder in sonstiger Form mit graphischen und/oder textuellen Elementen versehbare Oberfläche haben. Diese kann beispielsweise als Werbefläche genutzt sein. Material und Farbe des Einsatzelementes können dabei an das Fahrzeug und dessen sonstige Teile angepasst sein.

Ein Einsatzelement kann insbesondere als Trittelement ausgebildet sein. Ein Trittelement kann eine beliebige Form haben. Es kann insbesondere als Trittplatte mit geschlossener Trittfläche ausgebildet sein. Alternativ kann eine Trittfläche gitterförmig, sprossenförmig oder in sonst geeigneter Form gebildet sein. Im Folgenden wird repräsentativ eine Trittplatte beschrieben, wobei die Ausführungen auch für jede andere Form eines Trittelements Geltung haben.

Eine Trittplatte kann bevorzugt ein Flächenelement aufweisen, das im Wesentlichen als zu einer ebenen oder leicht gewölbten Platte geformter Trittbereich ausgebildet ist, und eine quer oder schräg dazu, insbesondere senkrecht dazu angeordnete Stützfläche. Der Trittbereich kann bevorzugt einen Rand haben, der mit einem stufenförmigen Absatz in der Oberseite des Radhauskörpers in teilweiser oder vollständiger Konturenergänzung korrespondiert. Der Absatz in der Oberseite des Radhauskörpers und der Rand der Trittplatte sind bevorzugt gebogen, insbesondere halbringförmig. Alternativ können der Rand des Trittbereichs und der stufenförmige Absatz in der Oberseite eines Radhauskörpers eckig verlaufen.

Eine Trittplatte kann bevorzugt mit der Abstützfläche in eine schlitzförmige Aussparung in der anbauseitigen Wandung eines Radhauskörpers eingesetzt werden, wobei die Trittebene sich in teilweiser oder vollständiger Konturenergänzung in eine wannenförmige Einbuchtung in der Oberseite des Radhauskörpers einfügt.

Die Trittplatte kann dazu ausgebildet sein, Gewichtskräfte aufzunehmen und direkt auf das Fahrzeug zu übertragen, ohne dass hierbei der Radhauskörper belastet wird. Die Trittplatte kann hierzu eine Abstützfläche aufweisen, die zur direkten Befestigung am Fahrzeug ausgebildet ist. Die Trittplatte kann insbesondere dazu ausgebildet sein, über eine gemeinsame Befestigungsvorrichtung mit dem Radhauskörper am Fahrzeug angebracht zu werden.

Von dem Radhauskörper kann durch die teilweise oder vollständige Konturenergänzung ein Teil der auf den Radhauskörper wirkenden Lasten über die Trittplatte auf das Fahrzeug abgetragen werden. Die Trittplatte kann somit als Versteifungselement für den Radhauskörper dienen. Radhauskörper und Trittplatte können bevorzugt im Bereich der anbauseitigen Wandung durch ein gemeinsames Befestigungsmittel mit dem Fahrzeug verbunden werden. In diesem Fall ist für die Anbringung der Trittplatte kein zusätzlicher Befestigungspunkt am Fahrzeug erforderlich, was zu einer besonders einfachen Anbauschnittstelle führt. Alternativ können für die Trittplatte und den Radhauskörper separate Befestigungsmittel vorgesehen sein. Ein Einsatzelement kann auch als Deckplatte mit einer als im Wesentlichen ebene oder leicht gewölbte Platte geformten Deckfläche ausgebildet sein. Die Deckfläche weist bevorzugt einen Rand auf, der mit einem stufenförmigen Absatz in der Oberseite eines Radhauskörpers in teilweiser oder vollständiger Konturenergänzung korrespondiert. Der Rand und der stufenförmige Absatz können bevorzugt in gebogener Form, insbesondere halbringförmig, verlaufen. Alternativ können der besagte Rand und der Absatz eckig verlaufen.

Auf der Unterseite der Deckfläche können ein oder mehrere Erhebungen oder Vertiefungen, insbesondere als Versteifungselemente angeordnet sein, die bevorzugt mit einer oder mehreren Vertiefungen oder Erhebungen, insbesondere mit einem oder mehreren Versteifungselementen, in der Oberseite eines Radhauskörpers in teilweiser oder vollständiger Konturenergänzung korrespondieren. Eine solche Deckplatte kann ebenfalls auf einen Radhauskörper aufgesetzt und insbesondere in eine wannenförmige Einbuchtung in einem Radhauskörper eingelegt sein. Die Deckplatte kann hierbei vergleichsweise dünner ausgebildet sein als eine Trittplatte. Sie kann einen lokalen Versteifungseffekt für den Radhauskörper bewirken. Insbesondere können in horizontaler Richtung von dem Radhauskörper im Bereich des stufenförmigen Absatzes Kräfte auf die Deckplatte übertragbar sein. Die Deckplatte kann sich wiederum im Bereich einer Anbauseite direkt am Fahrzeug abstützen.

Am Rand des Einsatzelementes und der wannenförmigen Einbuchtung können formschlüssig ineinander greifende aufrechte Verbindungselemente, insbesondere in Stift- und Öffnungsform, vorhanden sein. Diese können stabilisierend wirken und Schwingungen des Einsatzelementes dämpfen oder eliminieren.

Ein Radhauskörper kann mit einem oder mehreren Einsatzelementen und ggfs. einem Spritzlappen ein Baukastensystem bilden, wobei jedes der genannten Teile bevorzugt leicht austauschbar ist. Radhauskörper und Einsatzelemente können insbesondere standardisierte Formen haben. Es kann vorgesehen sein, dass ein Einsatzelement unabhängig von der Befestigung des Radhauskörpers am Fahrzeug anbringbar ist. Die Einsatzelemente können alternativ oder zusätzlich direkt am Radhauskörper anbringbar, beispielsweise per Clip-Verschluss fixierbar sein. Hierdurch können die Einsatzelemente in einfacher Weise getauscht werden. Alternativ kann vorgesehen sein, dass ein Einsatzelement, insbesondere eine Trittplatte, über ein oder mehrere gemeinsame Befestigungselemente mit dem Radhauskörper am Fahrzeug anbringbar ist. Die Befestigungsschriittstelle zwischen Kotflügel und Fahrzeug kann standardisiert sein und'für jede beliebige Kombination eines Radhauskörpers mit oder ohne Einsatzelement geeignet sein, was besonders kostengünstig und platzsparend ist.

Alternativ oder zusätzlich kann ein Baukastensystem unterschiedliche Formen von Radhauskörper umfassen, die beispielsweise zur Überdeckung von Fahrzeugrädern unterschiedlicher Größe oder von mehreren Fahrzeugrädern bei Tandem-Achsern mit ggfs. unterschiedlichen Achsabständen ausgebildet sind. Alle Radhauskörpervarianten können bevorzugt standardisierte Befestigungspunkte zur einzelnen Befestigung oder zur gemeinsamen Befestigung mit einem Einsatzelement am Fahrzeug haben. Ein Baukastensystem kann insbesondere derart ausgebildet sein, dass Deckplatten ohne Demontage des Radhauskörpers austauschbar sind. Die Deckplatten können beispielsweise als leicht wechselbare Werbeträger verwendet werden.

In den Unteransprüchen sind weitere vorteilhafte Ausbildungen der Erfindung angegeben.

Die Erfindung ist in den Zeichnungen beispielsweise und schematisch dargestellt. Es zeigen:
- Figur 1:: eine Explosionsdarstellung eines Kotflügels mit Einsatzelementen,
- Figur 2:: eine perspektivische Darstellung eines Kotflügels mit eingesetzter Trittplatte und einem Spritzlappen,
- Figur 3:: eine perspektivische Darstellung eines Radhauskörpers mit Sicht von schräg unten auf die Anbauseite,
- Figur 4:: eine perspektivische Darstellung des Radhauskörpers aus Figur 3 von schräg oben, ohne Einsatzelement,
- Figur 5:: eine Draufsicht auf einen Radhauskörper,
- Figur 6:: eine Schnittdarstellung eines Radhauskörpers gemäß Schnittlinie VI-VI aus Figur 5,
- Figur 7:: eine Schnittdarstellung eines Radhauskörpers gemäß Figur 6 mit eingesetzter Trittplatte,
- Figuren 8 und 9:: perspektivische Ansichten einer Trittplatte von schräg oben und schräg unten,
- Figur 10:: eine perspektivische Darstellung einer Deckplatte von schräg unten,
- Figur 11:: eine perspektivische Darstellung eines Tandem-Kotflügels,
- Figur 12:: eine Variante des Kotflügels von Figur 1 mit abgewandelten Einsatzelementen,
- Figur 13 und 14:: Detaildarstellungen eines Einsatzelements von Figur 12 in Perspektive und Schritt und
- Figur 15:: eine ausschnittsweise perspektivische Darstellung einer Anbaulage eines Kotflügels nebst einer Trittstufe an einem Fahrzeug.

Die Erfindung betrifft einen Kotflügel (1) zum Anbau an Fahrzeuge (29), insbesondere an PKW-Anhänger, LKW oder LKW-Anhänger, mit einem Radhauskörper (2) zur Überdeckung von einem oder mehreren Fahrzeugrädern (30).

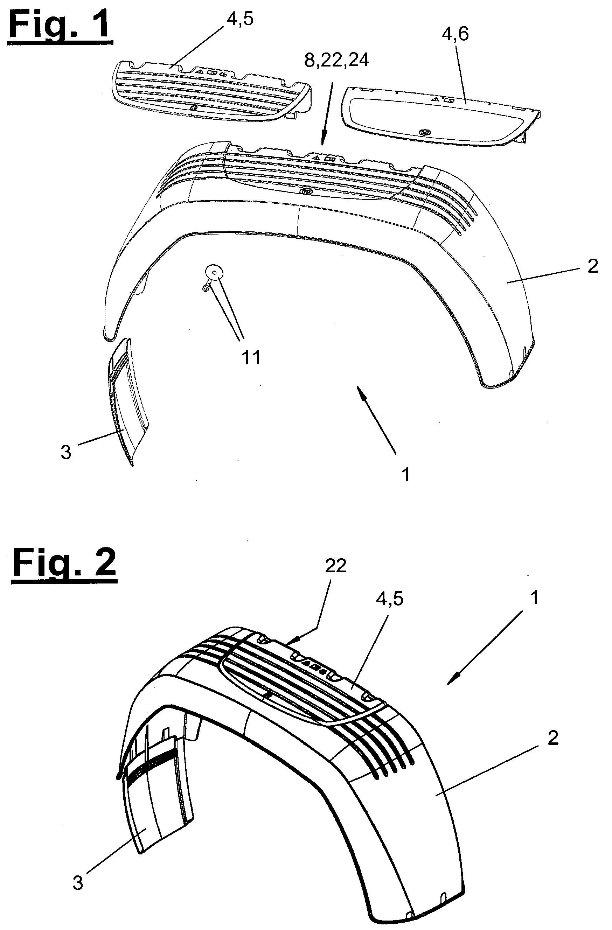

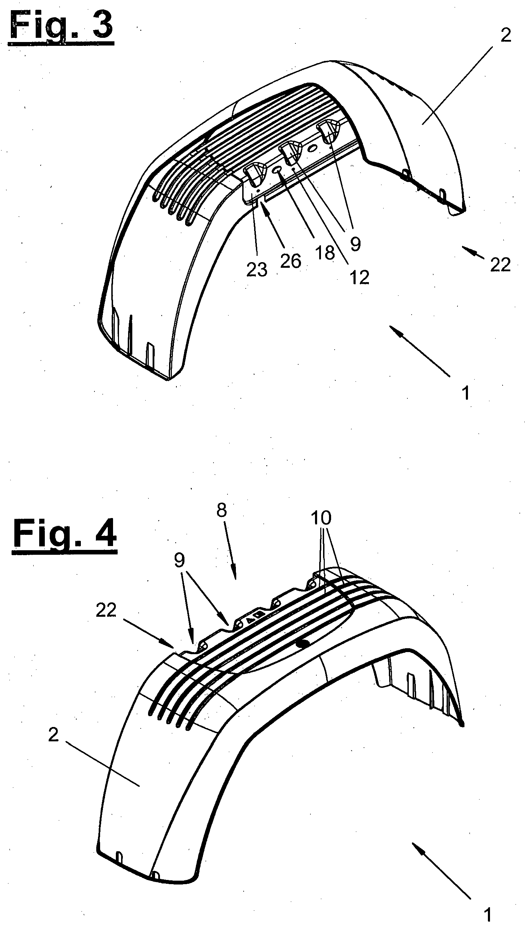

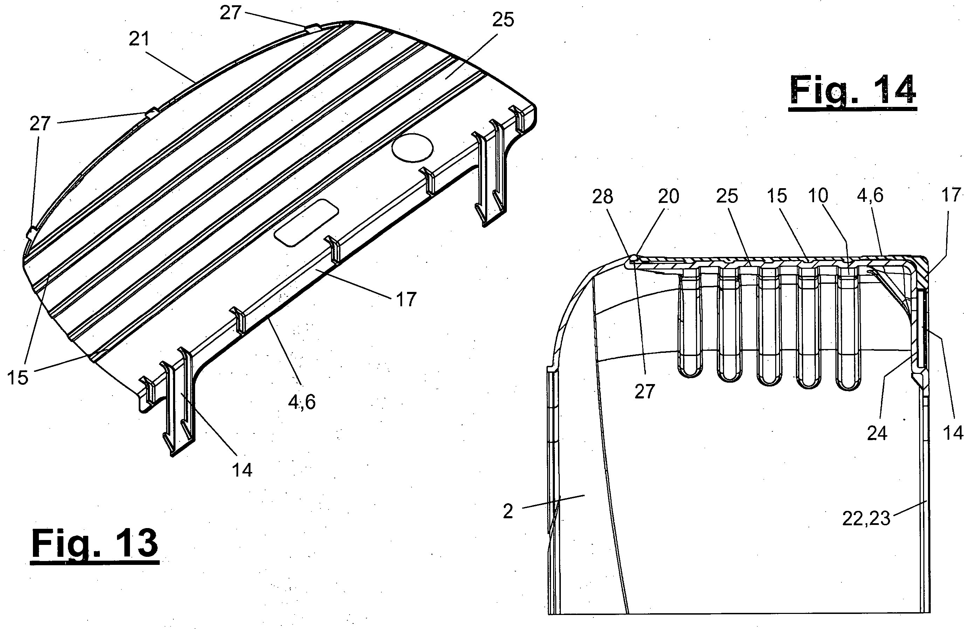

Ein solcher Radhauskörper (2) ist beispielsweise in den Figuren 1 bis 7 und 11 bis 15 in verschiedenen Ansichten dargestellt. Der Kotflügel (1) kann neben dem Radhauskörper (2) einen Spritzlappen (3) und/oder ein Einsatzelement (4) aufweisen. Ein Einsatzelement (4) kann insbesondere als Trittplatte (5) oder als Deckplatte (6) ausgebildet sein. Ferner kann dem Kotflügel (1) eine Trittstufe (31) am Fahrzeug (29) zugeordnet sein.

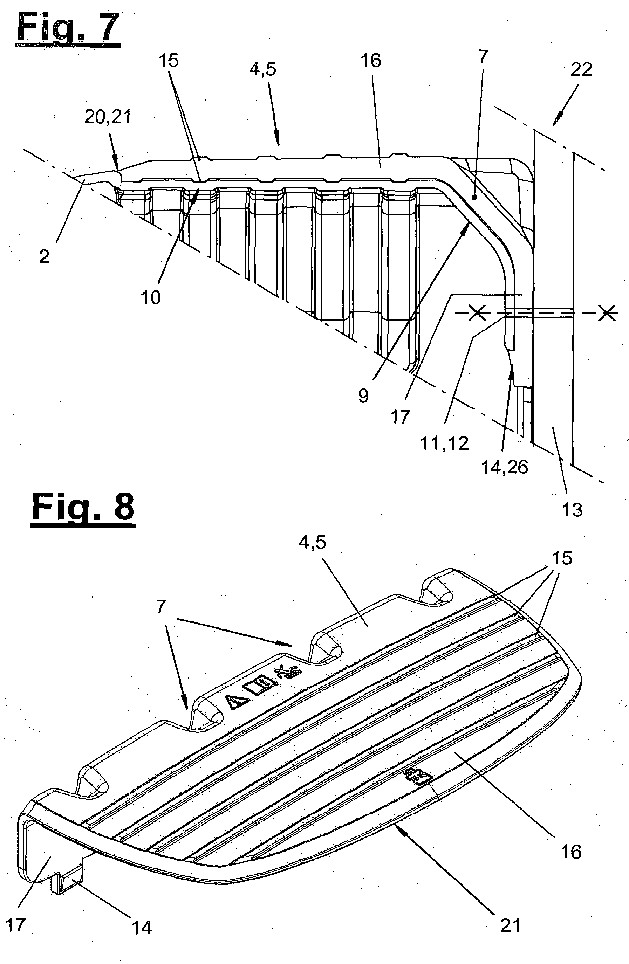

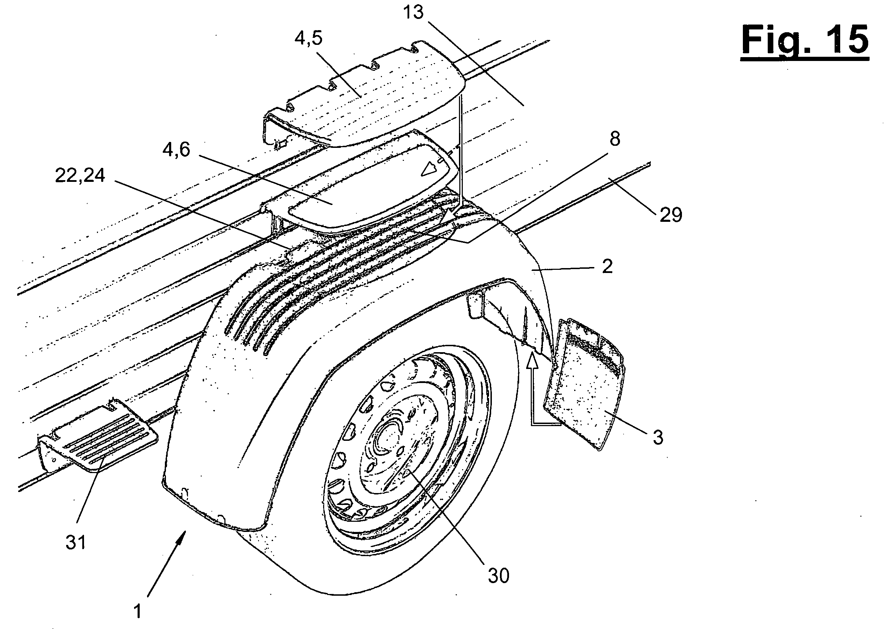

Figur 15 zeigt die Anbausituation an einem Fahrzeug (29). Der Kotflügel (1) kann an einem tragenden Element (13) des Fahrzeugs, z.B. an einer seitlichen Aufbauwand, einem Fahrgestellteil oder dgl., dauerhaft oder lösbar befestigt sein. Hierbei kann zumindest der Radhauskörper (2) an seiner Anbauseite (22) und ggf. auch das Einsatzelement (4) am tragenden Element (13) befestigt werden. Figur 7 zeigt hierzu weitere Details.

Figur 15 verdeutlicht außerdem die Möglichkeit zum Anbau und ggf. Wechsel von unterschiedlichen Einsatzelementen (4) am Radhauskörper (2). Zudem ist in Figur 15 die Anordnung einer Trittstufe (31) dargestellt, die dem Kotflügel (1) zugeordnet sein kann und die ggf. in geeigneter Lage am Fahrzeug (29), z.B. eigenständig am tragenden Fahrzeugelement (13) befestigt wird.

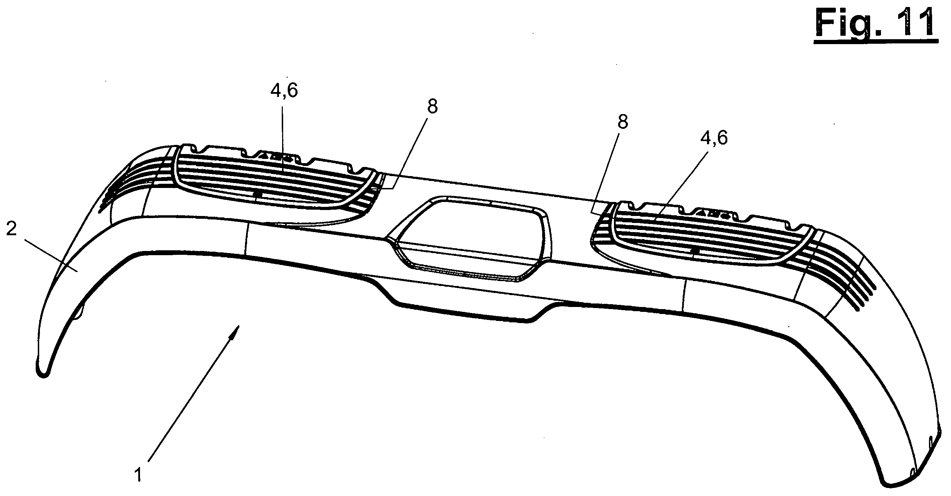

Figur 1 bis 7 und 12 bis 15 verdeutlichen einen Kotflügel (1) und dessen Ausbildung für ein einzelnes Fahrzeugrad (30). In Figur 11 ist die Variante eines Kotflügels (1) für eine Tandemachse dargestellt, die einen lang gestreckten Radhauskörper (2) zur Überdeckung von zwei Fahrzeugrädern aufweist. Bei dieser Variante sind zwei Einsatzelemente (4) vorhanden, von denen jedes über einem Radausschnitt bzw. über einem Fahrzeugrad angeordnet ist. Die Zahl der Einsatzelemente (4) kann alternativ kleiner oder größer sein. In Abwandlung der gezeigten Ausführungsform kann ein Kotflügel (1) auch für drei oder mehr Achsen und Fahrzeugräder (30) vorgesehen sein.

Der Radhauskörper (2) weist an seiner über dem Fahrzeugrad (30) gelegenen oberen Außenseite eine Aufnahme (8) und an seiner seitlichen und zum tragenden Fahrzeugelement (13) weisenden Anbauseite (22) eine Aussparung (24) für ein Einsatzelement (4) auf.

Der Radhauskörper (2) des Kotflügels (1) kann bevorzugt an seiner oberen und über einem Fahrzeugrad (30) befindlichen Seite eine wannenartige Einbuchtung (8) aufweisen, welche die besagte Aufnahme bildet. Die wannenartige Einbuchtung (8) ist bevorzugt in horizontaler Erstreckung zur Anbauseite (22) am Fahrzeug (29) hin offen und weist zu den anderen Seiten hin einen im Querschnitt stufenförmigen Absatz (20) auf, der in horizontaler Ebene in gebogener Form über die Oberseite des Radhauskörpers (2) verläuft. Der Absatz (20) kann insbesondere derart ausgebildet sein, dass er, wie in den Zeichnungen dargestellt, in horizontaler Ebene von der Anbauseite (22) des Radhauskörpers (2) aus über die obere und über dem Fahrzeugrad (30) befindlichen Seite des Radhauskörpers (2) in gebogener Form hinweg verläuft und anschließend wieder im Bereich der Anbauseite (22) endet. Die Enden des stufenförmigen Absatzes (20) können bevorzugt senkrecht oder leicht schräg zur Anbauseite angeordnet sein. Der stufenförmige Absatz (20) kann insbesondere halbringförmig verlaufen.

Die Enden des stufenförmigen Absatzes (20) können bei einem am Fahrzeug montierten Zustand des Radhauskörpers (2) bevorzugt in anliegendem Kontakt zu einem tragenden Fahrzeugelement (13) stehen. Auf diese Weise können Kräfte in Längsrichtung der Enden des stufenförmigen Absatzes (20) an dem tragenden Fahrzeugelement (13) abgestützt sein.

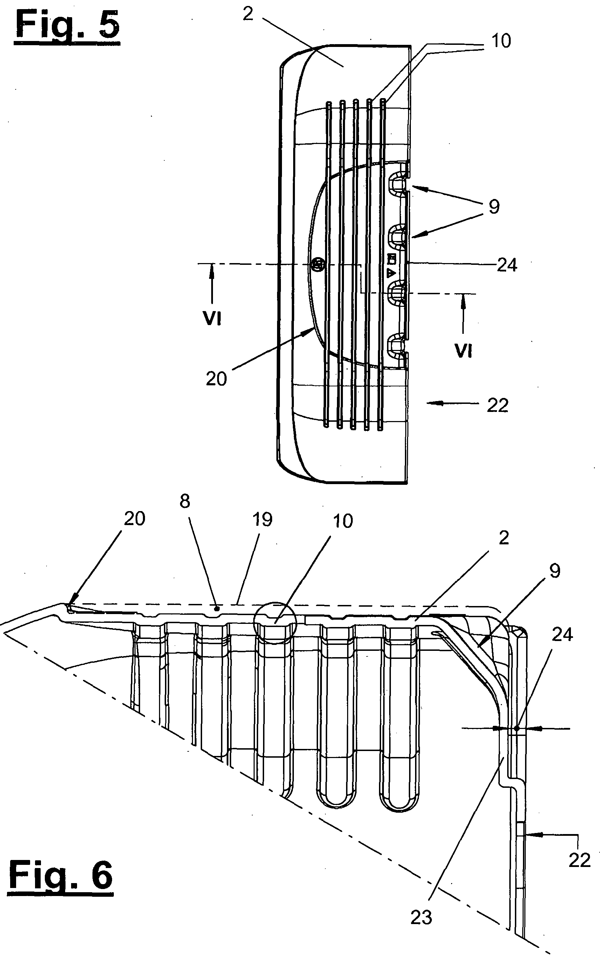

Ein bevorzugter Querschnitts-Verlauf des stufenförmigen Absatzes (20) ist beispielsweise in Figur 6 gezeigt. Durch den stufenförmigen Absatz (20) ist ein Flächenteil der Oberseite des Radhauskörpers (2) im Vergleich zu einer gedachten und regelmäßig verlaufenden Außenkontur (19) des Radhauskörpers (2) zurückversetzt. Die Zurückversetzung besteht bevorzugt nach innen hin, also in Richtung zu einem Fahrzeugrad (30). Hierdurch wird die wannenartige Einbuchtung (8) gebildet. Das Maß der Zurückversetzung kann im Wesentlichen der Wandstärke des Radhauskörpers (2) entsprechen. Auf diese Weise kann erreicht werden, dass im Bereich des stufenförmigen Absatzes (20) ein Versteifungseffekt entsteht, wobei Schubkräfte zwischen der wannenartigen Einbuchtung (8) und den nach außen hin angrenzenden Teilen des Radhauskörpers (2) in einem nur mäßig gekrümmten Kraftverlauf übertragbar sind. Der stufenförmige Absatz (20) weist bevorzugt in Querrichtung zu seinem gebogenen Verlauf eine hohe Schubsteifigkeit auf.

Die wannenartige Einbuchtung (8) in der Oberseite des Radhauskörpers (2) kann bevorzugt eine derartige flächige Ausdehnung aufweisen, dass sie bei einem vollständigen Einfedern eines Fahrzeugrades (29) eine Kontaktzone zwischen einem Fahrzeugrad (30) und dem Radhauskörper (2) überlappt. Im Bereich der wannenartigen Einbuchtung (8) kann bevorzugt eine definierte Anschleiffläche zwischen dem Radhauskörper und einem Fahrzeugrad (30) gebildet sein. Bei einem Kontakt zwischen dem Fahrzeugrad (30) und dem Radhauskörper (2) können in den Radhauskörper (2) eingebrachte Kräfte über die wannenartige Einbuchtung (8) aufgenommen und über den stufenförmigen Absatz (2) in definierter Weise auf die angrenzenden Bereiche des Radhauskörpers (2) übertragbar sein. Die wannenförmige. Einbuchtung (8) kann bevorzugt eine durch Versteifungselemente (10) erhöhte Stabilität aufweisen. Insbesondere kann im Bereich des stufenförmigen Absatzes (20) und in dessen Längsrichtung eine erhöhte Zugfestigkeit bestehen. Bei einem Aufwölben des Radhauskörpers (2) kann somit ein Aufreißen oder lokales Überdehnen des Radhauskörpers (2) vermieden werden.

Der Radhauskörper (2) kann alternativ oder zusätzlich zu der Ausbildung einer wannenförmigen Einbuchtung (8) an seiner Oberseite ein oder mehrere Versteifungselemente (10) aufweisen. Die Versteifungselemente (10) können beliebig ausgebildet sein. Sie können insbesondere als unter Materialhinzufügung aufgebrachte Versteifungsrippen ausgebildet sein. Bevorzugt können sie als linienförmige Sicken ausgebildet sein. Die Versteifungselemente (10) sind bevorzugt länglich ausgebildet und verlaufen in einer Längsrichtung über den Radhauskörper (2), d.h. in Richtung einer Umfangsdrehung eines Fahrzeugrades (30). Die Versteifungselemente (10) bewirken in dieser Längsrichtung bevorzugt eine erhöhte Zugfestigkeit und ggfs. gleichzeitig eine erhöhte Verwindungsstabilität.

Die Versteifungselemente (10) können insbesondere eine wannenartige Einbuchtung (8) in der Oberseite des Radhauskörpers (2) überziehen. Ein oder mehrere Versteifungselemente (10) können somit innerhalb der wannenförmigen Einbuchtung (8) angeordnet sein, wobei die Versteifungselemente (10) bevorzugt in Umfangsdrehrichtung des Fahrzeugrades (30) angeordnet sind und sich an jeweils beiden Enden bis zu dem stufenförmigen Absatz (20) hin erstrecken. Sie können ggf. zusätzlich in weitere Versteifungselemente (10) übergehen, die in den in einer Umfangsdrehungsrichtung eines Fahrzeugrades (30) angrenzenden Flächenbereichen des Radhauskörpers (2) angeordnet sind. Auf diese Weise kann ein Längsversteifungseffekt des Radhauskörpers (2) erzielt werden, der in seiner Wirkung über die Erstreckung einer wannenförmigen Einbuchtung (8) hinausgeht. Je nach zu erwartetem Belastungszustand des Radhauskörpers kann es bevorzugt sein, dass die Versteifungselemente innerhalb und außerhalb der wannenförmigen Einbuchtung (8) aneinander angrenzen oder ineinander übergehen. Bei einem Übergang der Versteifungselemente (10) ineinander überwiegt eine Versteifungswirkung in Längsrichtung des Radhauskörpers (2). Bei einem Angrenzen der Versteifungselemente (10) aneinander überwiegt der durch einen stufenförmigen Absatz (20) in der Oberseite des Radhauskörpers (2) erzeugte Versteifungseffekt.

Eine anbauseitige Wandung (23) des Radhauskörpers (2) kann bevorzugt einen von der Kante zwischen der Oberseite und der Anbauseite (22) des Radhauskörpers (2) ausgehenden und sich nach unten hin erstreckenden stufenförmigen Bereich aufweisen, der eine Aussparung (24) gegenüber der Anbauebene bildet. Eine solche Aussparung (24) kann insbesondere derart gebildet sein, dass die anbauseitige Wandung (23) des Radhauskörpers (2) im Bereich der Aussparung (24) im Vergleich zur Anbauebene parallel zum Innenraum des Radhauskörpers (2) hin zurückversetzt ist.

Der Radhauskörper (2) kann zusätzlich im Bereich der Kante zwischen der Oberseite und der Anbauseite (22) des Radhauskörpers (2) eine oder mehrere sickenförmige und bevorzugt schräg verlaufende Ausnehmungen (9) aufweisen. Die Ausnehmungen (9) können insbesondere einen schräg verlaufenden Durchgang zwischen einer wannenförmigen Einbuchtung (8) und einer anbauseitigen Aussparung (24) bilden. Es kann eine beliebige Anzahl solcher Ausnehmungen (9) vorhanden sein, beispielsweise zwei, drei, vier oder mehr solcher Ausnehmungen. Die Ausnehmungen (9) können beispielsweise in Form von schräg eingebrachten Sicken gebildet sein. Sie können einer Versteifung der Kante zwischen der Oberseite und der Anbauseite (22) eines Radhauskörpers (2) dienen. Alternativ oder zusätzlich können die Ausnehmungen (9) einen Freiraum für Stützelemente (7) an einem Einsatzelement (4) schaffen.

Bild 3 zeigt eine perspektivische Ansicht des Innenraums eines Radhauskörpers (2) mit Blick auf die Anbauseite (22). In der anbauseitigen Wandung (23) können beliebige Öffnungen zur Befestigung des Radhauskörpers (2) an einem Fahrzeug (29) vorgesehen sein. Es können insbesondere Befestigungsöffnungen (12) im Bereich der anbauseitigen Aussparung (24) in dem Radhauskörper (2) vorgesehen sein. Durch solche Befestigungsöffnungen (12) kann ein Radhauskörper (2) ggfs. gemeinsam mit einem Einsatzelement (4,5,6) an einem Fahrzeug (29) zu befestigen sein. Alternativ oder zusätzlich können in der einbauseitigen Wandung (23) Durchgriffsöffnungen (18) vorgesehen sein. Durch derartige Durchgriffsöffnungen (18) kann beispielsweise ein Befestigungselement (11) durchgeführt werden zur separaten Befestigung eines Einsatzelementes (4,5,6) am Fahrzeug (29).

Eine wannenartige Einbuchtung (8) in der Oberseite eines Radhauskörpers (2) kann bevorzugt zur Aufnahme eines Einsatzelementes (4,5,6) ausgebildet sein, insbesondere zur Aufnahme einer Trittplatte (5) oder einer Deckplatte (6). Ein solches Einsatzelement (4,5,6) kann dabei eine abgewinkelte Form haben und mit einem ersten Flächenteil (16,25) in die wannenartige Einbuchtung (8) einlegbar sein. Ein Einsatzelement (4,5,6) kann ggf. zusätzlich ein weiteres Flächenelement (17) aufweisen, das in eine Aussparung (24) in der anbauseitigen Wandung (23) des Radhauskörpers (2) einlegbar ist. Zwischen einem Radhauskörper (2) und einem Einsatzelement (4) kann in der eingesetzten Stellung bevorzugt ein teilweiser der vollständiger Formschluss bestehen. Ein Einsatzelement (4) kann hierbei in unterschiedlicher Weise ausgebildet sein. Ein Einsatzelement (4) kann beispielsweise eine Trittplatte (5) sein. Alternativ kann ein Einsatzelement (4) eine Deckplatte (6) sein.

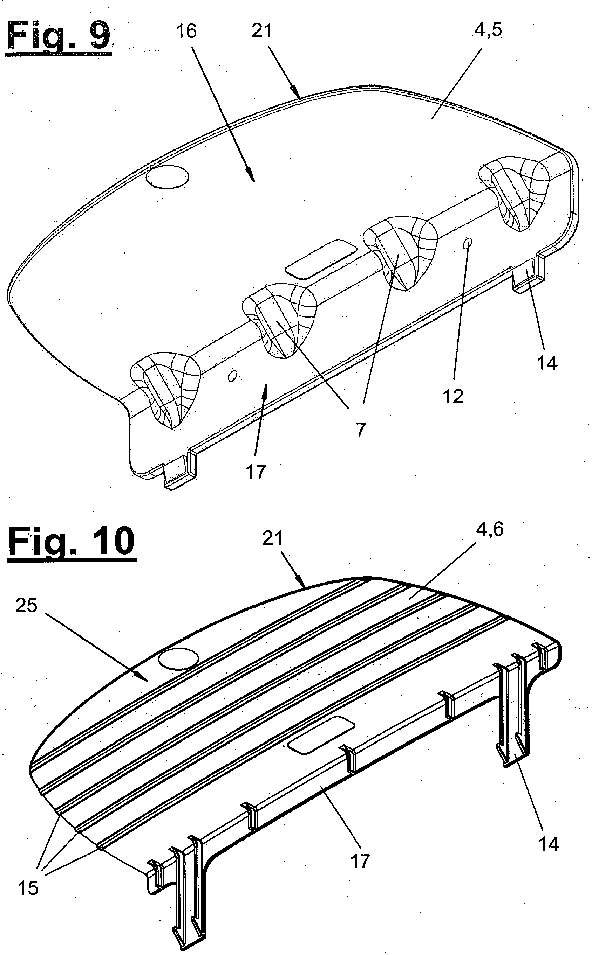

Eine bevorzugte Ausführungsform einer Trittplatte (5) ist in Figur 8 und 9 dargestellt. Eine solche Trittplatte ist zur seitlichen Anordnung an einem Fahrzeug (29), insbesondere an einem Lkw oder an einem Anhänger, ausgebildet, wobei die Trittplatte (5) einen als im Wesentlichen ebene oder gewölbte Platte geformten Trittbereich (16) und eine senkrecht dazu angeordnete Abstützfläche (17) aufweist. Die Abstützfläche (17) kann durchgehend oder unterbrochen ausgebildet sein.

Der Trittbereich (16) der Trittplatte (6) kann bevorzugt dazu ausgebildet sein, mit teilweisem oder vollständigem Formschluss in eine wannenförmige Einbuchtung (8) eines Radkörpers (2) eingelegt zu werden. Der Trittbereich (16) kann hierbei beispielsweise einen gebogenen Rand (21) haben, der mit einem gebogenen Absatz (20) in der Oberseite eines Radhauskörpers (2) in teilweiser oder vollständiger Konturenergänzung korrespondiert.

Insbesondere kann es bei einem Einsetzen einer Trittplatte (5) in einen Radhauskörper (2) zu einer Kontaktierung zwischen dem Rand (21) und dem stufenförmigen Absatz (20) über der gesamten Länge kommen. Alternativ kann die Kontaktierung auf bestimmte Abschnitte des Randes (21) begrenzt sein.

Zwischen dem Rand (21) und dem stufenförmigen Absatz (20) können Kräfte zwischen der Trittplatte (5) und dem Radhauskörper (2) gegenseitig abgestützt sein. Im Bereich des Kontaktes zwischen dem Rand (21) an der Trittplatte (5) und dem stufenförmigem Absatz (20) am Radhauskörper kann alternativ oder zusätzlich ein Dichtelement vorgesehen sein.

Eine Trittplatte (5) kann auf der Unterseite des Trittbereichs (16) ein oder mehrere Versteifungselemente (15) aufweisen. Diese Versteifungselemente (15) können beispielsweise als längliche Sicken oder als Versteifungsrillen gebildet sein. Die Sicken oder Rillen können entweder eine Materialerhebung gegenüber der Trittplatte (5) bilden oder in diese eingesenkt sein. In Figur 7 ist eine Trittplatte (5) mit untenseitig angeordneten Versteifungsrippen (15) dargestellt. Figur 9 zeigt ein alternatives Ausführungsbeispiel ohne untenseitig angeordnete Versteifungselemente (15).

Die Versteifungselemente (15) in der Unterseite des Trittbereichs (16) können bevorzugt mit einem oder mehreren Versteifungselementen (10) in einer wannenförmigen Einbuchtung (8) eines Radhauskörpers (2) in teilweiser oder vollständiger Konturenergänzung korrespondieren. So können über die Versteifungselemente (10,15) zwischen dem Radhauskörper (2) und der Trittplatte (5) Kräfte gegenseitig abgestützt werden. Weiterhin kann eine volumenmäßige Ausfüllung der wannenförmigen Einbuchtung (8) und/oder der Versteifungselemente (10) in der Oberseite des Radhauskörpers (2) erreicht werden, wodurch eine Ansammlung von Wasser oder anderen Verschmutzungen verhindert werden kann. Eine Trittplatte (5) kann auch auf der Oberseite des Trittbereichs (16) ein oder mehrere Versteifungselemente (15) aufweisen. Diese können neben einer Versteifung auch eine Abrutschsicherung bewirken.

Zwischen dem Trittbereich (16) und der Abstützfläche (17) einer Trittplatte (5) können bevorzugt ein oder mehrere Stützelemente (7) zur Übertragung von Kräften und Momenten zwischen dem Trittbereich (16) und der Abstützfläche (17) angeordnet sein. Das eine oder die mehreren Stützelemente (7) können bevorzugt mit einer oder mit mehreren schrägen Ausnehmungen (9) in einer Kante zwischen der Oberseite und der Anbauseite (22) eines Radhauskörpers (2) in teilweiser oder vollständiger Konturenergänzung korrespondieren. Die angeformten schrägen und zu den Ausnehmungen (9) vorspringenden Stützelemente (7) stabilisieren und versteifen die Trittplatte (5) im Eckbereich. Sie greifen formschlüssig in die ebenfalls schrägen Ausnehmungen (9) ein.

Figur 7 zeigt ein bevorzugtes Ausführungsbeispiel eines Radhauskörpers (2) und einer Trittplatte (5). Die Trittplatte (5) weist hierbei einen Trittbereich (16) auf, der in eine wannenartige Einbuchtung (8) des Radhauskörper (2) unter teilweiser Konturenergänzung eingelegt ist. Der Trittbereich (16) weist einen gebogenen Rand (21) auf, der einen stufenförmigen Absatz (20) in dem Radhauskörper (2) kontaktiert. Eine Abstützfläche (17) der Trittplatte (5) ist in eine schlitzförmige Aussparung (24) in der Anbauseite des Radhauskörpers (2) eingelegt. Sickenförmige Stützelemente (7) sind hierbei in Ausnehmungen (9) des Radhauskörpers (2) eingelegt. Die Trittplatte (5) und der Radhauskörper (2) können bevorzugt eine gemeinsame glatte Anbauebene bilden.

Figur 7 zeigt hierbei eine teilweise Konturenergänzung zwischen einer Trittplatte (5) and einem Radhauskörper (2). Versteifungsrippen (15) an der Unterseite der Trittplatte (5) greifen in Versteifungssicken (10) in der Oberseite des Radhauskörpers (2) und insbesondere innerhalb einer wannenförmigen Einbuchtung (8) ein. In den Flächenbereichen zwischen den Versteifungselementen (10,15) besteht keine direkte Konturenberührung. Stattdessen ist ein beispielsweise toleranzbedingter Freiraum vorgesehen.

In der anbauseitigen Wandung (23) des Radhauskörpers (2) und in der Abstützfläche (17) können miteinander korrespondierende Befestigungsöffnungen vorgesehen sein, so dass der Radhauskörper (2) und die Trittplatte (5) gemeinsam über ein Befestigungselement (12) an einem tragenden Fahrzeugelement (13) fixiert werden können. Figur 7 zeigt eine beispielhafte Anordnung solcher Befestigungsöffnungen. Durch die direkte Anlage der Trittplatte (5) am Fahrzeug (29) können beispielsweise durch das Auftreten einer Person auf die Trittplätte (5) erzeugte Belastungen direkt an dem tragenden Fahrzeugelement (13) abgestützt werden, ohne dass hierbei der darunter liegende Radhauskörper (2) in Mitleidenschaft gezogen würde. Im Gegenzug kann eine Abstützung von auf den Radhauskörper (2) aufgebrachten Belastungen auch über die Trittplatte (5) erfolgen. Die Trittplatte (5) kann hierbei bevorzugt eine deutlich höhere Steifigkeit und Zugfestigkeit aufweisen, als der Radhauskörper (2). Durch das Zusammenspiel von Radhauskörper (2) und Trittplatte (5) kann bevorzugt erreicht werden, dass der Radhauskörper (2) in einer dünneren Wandstärke und somit leichter ausführbar ist.

Die Trittplatte (5) kann einen nach unten weisenden Bereich mit daran angeordneten Fixierelementen (14) aufweisen. Insbesondere können am unteren Ende der Abstützfläche (17) bevorzugt ein oder mehrere Fixierelemente (14) angeordnet sein. Diese Fixierelemente (14) sind bevorzugt dazu ausgebildet, in korrespondierende Fixieraufnahmen (26) in einer anbauseitigen Wandung (23) des Radhauskörpers (2) einzugreifen. Sie können insbesondere als Einrastnasen ausgebildet sein und einer relativen Befestigung der Trittplatte am Radhauskörper dienen. Eine solche relative Befestigung kann beispielsweise zur Vormontage eines Kotflügels günstig sein. So kann ein Radhauskörper zunächst mit einer Trittplatte (5) oder einem anderen Einsatzelement (4) sowie ggfs. mit einem Spritzlappen (3) vormontiert werden. Anschließend kann der gesamte Kotflügel über nur eine vordefinierte Schnittstelle am Fahrzeug (29) befestigt werden.

Ein Einsatzelement (4) für einen Kotflügel (1) kann als Deckplatte (6) ausgebildet sein. Eine solche Deckplatte (6) weist bevorzugt eine als im Wesentlichen ebene oder leicht gewölbte Platte geformte Deckfläche (25) auf, wobei die Deckfläche bevorzugt einen gebogenen Rand (21) hat, der mit einem gebogenen Absatz (20) des Radhauskörpers (2) in teilweiser oder vollständiger Konturenergänzung korrespondiert. An dem Rand (21) der Deckfläche (25) kann eine Dichtung vorgesehen sein. Die Ausbildung einer Deckplatte (6) kann ähnlich einer Trittplatte (5) sein.

Eine Deckplatte (6) kann auf der Unterseite der Deckfläche (25) ein oder mehrere Erhebungen oder Vertiefungen, insbesondere als Versteifungselemente (15) aufweisen, die mit einer oder mehreren Erhebungen oder Vertiefungen (10) in einer wannenförmigen Einbuchtung (8) eines Radhauskörpers (2) in teilweiser oder vollständiger Konturenergänzung korrespondieren. Durch eine Konturenergänzung zwischen einer Deckplatte (6) und einem Radhauskörper (2) können ein Versteifungs- und/oder ein Abdichtungseffekt in Analogie zu den obigen Ausführungen zur Trittplatte (5) erreicht werden. Figur 10 zeigt ein bevorzugtes Ausführungsbeispiel einer Deckplatte (6).

Eine Deckplatte (6) kann eine zur Anbauseite (22) hin geschlossene Kante aufweisen. Bei einem Einsetzen einer Deckplatte (6) in einen Radhauskörper (2) kann es so zu einem Formschluss zwischen der Deckplatte (6) und einem tragenden Fahrzeugelement (13) kommen, so dass zwischen der Deckplatte (5) und dem tragenden Fahrzeugelement (13) Kräfte gegenseitig abstützbar sind. Eine Deckplatte (6) kann bevorzugt ein oder mehrere Fixierelemente (14) aufweisen, die an einer zur Anbauseite (22) an einem Fahrzeug (29) weisenden Kante der Deckfläche (25) angeordnet sind und quer von der Deckfläche (25) weg verlaufen.

Ein solches Fixierelement (14) ist bevorzugt dazu ausgebildet, in eine korrespondierende Fixieraufnahme (26) in einer anbauseitigen Wandung (23) eines Radhauskörpers (2) einzugreifen. Ein Fixierelement (14) kann insbesondere als Einrastnase ausgebildet sein.

Gegenüber einer Trittplatte (5) kann eine Deckplatte (6) vergleichsweise dünner ausgeführt sein. Sie kann ohne eine tragende Abstützfläche (17) ausgebildet sein. Je nach Einsatzzweck des Fahrzeugs (29) kann eine Deckplatte (6) eine Dichtwirkung und/oder eine Versteifungswirkung für den Radhauskörpers (2) erzeugen.

Neben den gezeigten und beschriebenen Ausführungsbeispielen der Erfindung sind zahlreiche weitere Ausführungen möglich. Beispielsweise kann der Radhauskasten (2) gemäß Figur 11 zur Überdeckung von zwei oder mehr Fahrzeugrädern (30) ausgebildet sein. Er kann hierbei bevorzugt zwei oder mehr wannenförmige Einbuchtungen (8) mit einem Einsatzelement (4) aufweisen. Alternativ oder zusätzlich können in der Oberseite eines solchen Radhauskörpers (2) ein oder mehrere Erhebungen oder Vertiefungen, insbesondere als längliche Versteifungselemente (10) angeordnet sein, die sich über die im Wesentlichen horizontale Länge des Radhauskörpers (2) erstrecken und dabei ggfs. auch ein oder mehrere wannenförmige Einbuchtungen (8) überziehen

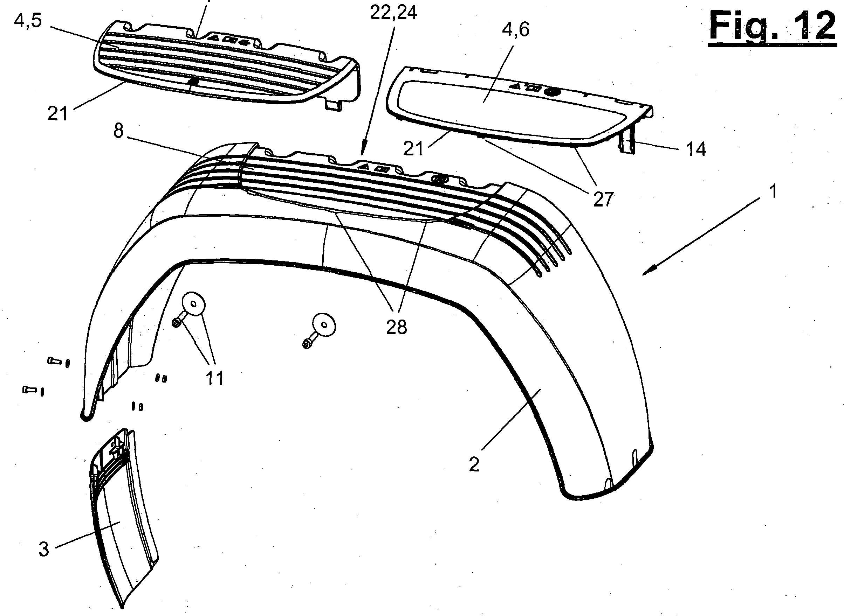

Figur 12 bis 14 zeigen eine weitere Abwandlung in der Formgebung und Verbindung von Radhauskörper (2) und Einsatzteil (4), insbesondere Deckplatte (6). Zwischen einer Deckfläche (25) der Deckplatte (6) und dem benachbarten Absatz (20) der Einbuchtung (8) können ein oder mehrere formschlüssig ineinander greifende Verbindungselemente (27,28) angeordnet sein. Diese befinden sich vorzugsweise an dem von der Anbauseite (23) abgewandten Rand (21) der Deckplatte (6) bzw. ihrer Deckfläche (25). Die Verbindungselemente (27,28) erstrecken sich im Wesentlichen horizontal. Sie sind z.B. als Stecknasen (27) und Aufnahmetaschen (28) ausgebildet. Beispielsweise befinden sich mehrere vorspringende Stecknasen (27) am Rand (21) der Deckfläche (25), wobei die zurückspringenden Aufnahmetaschen (28) am Sockel (20) angeordnet sind. Die Anordnung der Verbindungselemente (27,28) kann auch umgekehrt sein. Die Verbindungselemente (27,28) fixieren die Deckplatte (6) zusätzlich am besagten Rand (21) und wirken stabilisierend und schwingungsdämpfend.

Alternativ sich auch andere konstruktive Ausgestaltungen der Verbindungselemente (27,28), z.B. als Schnapphaken und Rastöffnungen oder dergleichen möglich. Ferner kann auch eine Trittplatte (5) in entsprechender Weise ausgebildet sein.

An einem Radhauskörper (2) können ein oder mehrere Spritzlappen (3) angeordnet sein. Der Radhauskörper (2) kann hierbei bevorzugt zu einer vertikalen Ebene mittensymmetrisch ausgebildet sein, so dass identische Radhauskörper (2) an der linken und der rechten Seite eines Fahrzeugs (29) anbringbar sind. Alternativ kann eine abweichende und nicht symmetrische Formgebung des Radhauskörpers (2) vorliegen.

Radhauskörper (2) und Einsatzelemente wie Trittplatte (5) und Deckplatte (6) können bevorzugt als Baukastensystem ausgebildet sein und normierte Maße haben, so dass die Einsatzelemente (4) an einem Radhauskörper (2) beliebig getauscht werden können. In der Oberseite einer Deckplatte (6) und/oder einer Trittplatte (5) können bevorzugt Flächen zur Aufnahme von Werbebotschaften oder Designelemente vorgesehen sein. Derartige Einsatzelemente (4) können als leicht auswechselbare Werbeträger dienen. Eine relative Fixierung zwischen einem Einsatzelement (4) und einem Radhauskörper (2) kann in beliebiger Weise erfolgen. Bevorzugt können die in den Zeichnungen dargestellten Fixierelemente (14) in Form von Rastnasen oder Clips verwendet werden. Alternativ ist eine haftende Befestigung über Klebemittel oder eine beliebige sonstige Befestigung möglich.

Der Trittbereich (16) eines Trittelements (5) und/oder die Deckfläche (25) einer Deckplatte (6) können beliebig ausgebildet sind. Sie können beispielsweise eine durchbrochene Form haben. Sie können insbesondere Ausnehmungen oder Einschnitte aufweisen oder aus mehreren Teilen gebildet sein.

An den Radhauskörper (2) kann bevorzugt innenseitig und ggf. in gemeinsamer Nutzung der Befestigungspunkte (12) mit dem tragenden Fahrzeugelement (13) ein Leiter- oder Aufsteigeelement befestigt sein. Ein solches Leiter- oder Aufsteigeelement kann beliebig ausgebildet sein. Es kann insbesondere einen an der Innenseite eines Radhauskörpers (2) eng anliegend verlaufenden Korpus haben, der ein Fahrzeugrad (30) umgreift und an der Außenseite des Fahrzeugrades (30) ein oder mehrere in Abwandlung von Figur 15 angebaute Trittstufen (31) oder Stiegen trägt.

Die gezeigten und beschriebenen Merkmale für die angeführten Ausführungsbeispiele können in beliebiger Weise miteinander kombiniert, weggelassen oder gegeneinander ersetzt werden. Insbesondere können die Merkmale eines Trittelements (5) mit den Merkmalen einer Deckplatte (6) kombiniert oder gegeneinander ersetzt werden. Das Trittelement (5) und/oder die Deckplatte (6) können bevorzugt aus einem Metall oder einem Kunststoff gefertigt sein. Sie können insbesondere aus einem PP-Kunststoff mit hohem Glasfaseranteil gebildet sein. Alternativ zu dem Trittelement (5) und der Deckplatte (6) sind beliebige andere Ausbildungen eines Einsatzelementes (4) möglich.

### BEZUGSZEICHENLISTE

- 1: Kotflügel
- 2: Radhauskörper
- 3: Spritzlappen
- 4: Einsatzelement
- 5: Trittelement / Trittplatte
- 6: Deckplatte
- 7: Stützelement / Sicke
- 8: wannenförmige Einbuchtung, Aufnahme für Einsatzelement
- 9: Ausnehmung für Stützelement
- 10: Erhebung oder Vertiefung / Versteifungselement / Sicke / Nut / Rippe
- 11: Befestigungselement
- 12: Befestigungsöffnung
- 13: Tragendes Fahrzeugelement / Träger / Rahmen
- 14: Fixierelement / Clip / einrastnase
- 15: Erhebung oder Vertiefung / Versteifungselement / Sicke / Nut / Stützrippe
- 16: Trittbereich
- 17: Abstützfläche
- 18: Öffnung / Durchgrifföffnung.
- 19: Gedachte, regelmäßig verlaufende Kontur
- 20: Absatz / Versteifungsrand
- 21: Rand / Dichtung
- 22: Anbauseite
- 23: Anbauseitige Wandung des Radhauskörpers.
- 24: Aussparung / schlitzförmige Ausnehmung
- 25: Deckfläche
- 26: Fixieraufnahme
- 27: Verbindungselement, Stecknase
- 28: Verbindungselement, Aufnahmetasche
- 29: Fahrzeug, Anhänger
- 30: Fahrzeugrad
- 31: Trittstufe

## Patentansprüche

1. Kotflügel zum Anbau an Fahrzeuge, insbesondere an PKW-Anhänger, LKW oder LKW-Anhänger, mit einem Radhauskörper (2) zur Überdeckung eines oder mehrerer Fahrzeugräder (30), wobei der Radhauskörper (2) eine Oberseite und seitlich daneben eine zur Befestigung an einem tragenden Fahrzeugelement (13) vorgesehene anbauseitige (22) Wandung (23) aufweist, wobei der Radhauskörper (2) außen an seiner Oberseite eine Aufnahme (8) und an seiner anbauseitigen (22) Wandung (23) eine Aussparung (24) für die Anordnung eines Einsatzelements (4) aufweist und wobei die Aussparung (24) von der Kante zwischen der Oberseite und der Anbauseite (22) des Radhauskörpers (2) ausgehend sich nach unten hin erstreckt und als ein gegenüber der Anbauebene stufenförmiger zurückversetzter Bereich des Radhauskörpers (2) ausgebildet ist.

2. Kotflügel nach Anspruch 1, **dadurch gekennzeichnet, dass** die Aufnahme (8) als wannenartige Einbuchtung (8) an der Oberseite ausgebildet und in horizontaler Erstreckung zur Anbauseite (22) hin offen ist und zu den anderen Seiten hin einen im Querschnitt stufenförmigen Absatz (20) bildet.

3. Kotflügel nach einem der Ansprüche 1 oder 2, **dadurch gekennzeichnet, dass** der Radhauskörper (2) im Bereich einer zur Anbauseite (22) weisenden Kante einer wannenförmigen Einbuchtung (8) eine oder mehrere sickenförmige und zwischen Oberseite und Anbauseite (22) des Radhauskörpers (2) schräg verlaufende Ausnehmungen (9) aufweist.

4. Kotflügel nach einem der Ansprüche 1, 2 oder 3, **dadurch gekennzeichnet, dass** ein eine wannenförmige Einbuchtung (8) umgebender stufenförmiger Absatz (20) in horizontaler Ebene in gebogener Form, insbesondere halbringförmig verläuft.

5. Kotflügel nach einem der Ansprüche 1 bis 4, **dadurch gekennzeichnet, dass** eine wannenartige Einbuchtung (8) in der Oberseite eines Radhauskörpers (2) eine derartige flächige Ausdehnung aufweist, dass sie bei einem vollständigen Einfedern eines Fahrzeugrades (30) eine Kontaktzone zwischen einem Fahrzeugrad (30) und dem Radhauskörper (2) überlappt.

6. Kotflügel nach einem der vorhergehenden Ansprüche, **dadurch gekennzeichnet, dass** der Kotflügel (1) einen Radhauskörper (2) mit einem Einsatzelement (4) aufweist, welches als Trittelement (5) oder als Deckplatte (6) ausgebildet ist.

7. Kotflügel nach einem der Ansprüche 1 bis 6, **dadurch gekennzeichnet, dass** das Einsatzelement (4,5,6) eine abgewinkelte Form mit einem ersten, in die wannenartige Einbuchtung (8) einlegbaren Flächenteil (16,25) und mit einem weiteren, in die Aussparung (24) einlegbaren Flächenelement (17) aufweist.

8. Kotflügel nach einem der vorhergehenden Ansprüche, **dadurch gekennzeichnet, dass** der Radhauskörper (2) zur gemeinsamen Befestigung mit dem Einsatzelement (4) an einem Fahrzeug (29) ausgebildet ist.

9. Kotflügel nach einem der vorhergehenden Ansprüche, **dadurch gekennzeichnet, dass** in einer anbauseitigen Wandung (23) des Radhauskörpers (2) eine oder mehrere Fixieraufnahmen (26) zur Aufnahme von Fixierelementen (14), insbesondere Einrastnasen, eines Einsatzelements (4) angeordnet sind.

10. Kotflügel nach einem der Ansprüche 7 bis 9, **dadurch gekennzeichnet, dass** der Flächenteil (16,25) einen Rand (21) hat, der mit dem Absatz (20) der Einbuchtung (8) in teilweiser oder vollständiger Konturenergänzung korrespondiert.

11. Kotflügel nach einem der Ansprüche 7 bis 10, **dadurch gekennzeichnet, dass** das Flächenteil (16,25) auf seiner Unterseite und ggf. seiner Oberseite eine oder mehrere längliche Erhebungen oder Vertiefungen (15) aufweist, wobei die Erhebungen oder Vertiefungen (15) an der Unterseite mit einer oder mehreren Erhebungen oder Vertiefungen (10) in der wannenförmigen Einbuchtung (8) des Radhauskörpers (2) in teilweiser oder vollständiger Konturenergänzung korrespondieren.

12. Kotflügel nach einem der Ansprüche 7 bis 11, **dadurch gekennzeichnet, dass** am Randbereich (21) des Flächenteils (16,25) und der Einbuchtung (8) formschlüssig ineinander steckbare, nasen- und taschenartige Verbindungselemente (27,28) angeordnet sind.

13. Kotflügel nach einem der Ansprüche 6 bis 12, **dadurch gekennzeichnet, dass** ein Trittelement (5) einen als Trittbereich ausgebildeten Flächenteil (16) und ein als Abstützfläche ausgebildetes Flächenelement (17) aufweist, zwischen denen ein oder mehrere, bevorzugt sickenartige Stützelemente (7) zur Übertragung von Kräften und Momenten zwischen Trittbereich (16) und Abstützfläche (17) angeordnet sind, wobei das eine oder die mehreren Stützelemente (7) des Trittelements (5) mit einer oder mehreren schrägen Ausnehmungen (9) des Radhauskörpers (2) in teilweiser oder vollständiger Konturenergänzung korrespondieren.

14. Kotflügel nach einem der Ansprüche 1 bis 13, **dadurch gekennzeichnet, dass** mindestens eine längliche Erhebung oder Vertiefung (10) die wannenförmige Einbuchtung (8) überzieht und an eine weitere längliche Erhebung oder Vertiefung (10), die in einer in Richtung der Umfangsdrehung eines Fahrzeugrads anschließenden Fläche des Radhauskörpers (2) verläuft, in gerader Richtung anschließt oder in diese übergeht.

## Claims

1. Mudguard for fitting to vehicles, in particular to passenger vehicle trailers, lorries or lorry trailers, with a wheelhouse body (2) for covering one or more vehicle wheels (30), wherein the wheelhouse body (2) has an upper side and, laterally next thereto, a fitting-side (22) wall (23) provided for fastening to a supporting vehicle element (13), wherein the wheelhouse body (2) has, on the outside on the upper side thereof, a receptacle (8) and, on the fitting-side (22) wall (23) thereof, a recess (24) for the arrangement of an insert element (4), and wherein the recess (24) extends downwards from the edge between the upper side and the fitting side (22) of the wheelhouse body (2) and is designed as a region of the wheelhouse body (2) that is step-shaped and is set back in relation to the fitting plane.

2. Mudguard according to Claim 1, **characterized in that** the receptacle (8) is designed as a trough-shaped indentation (8) on the upper side and is open in horizontal extent towards the fitting side (22) and, towards the other sides, forms an offset (20) which is step-shaped in cross section.

3. Mudguard according to either of Claims 1 and 2, **characterized in that** the wheelhouse body (2) has, in the region of an edge, facing the fitting side (22), of a trough-shaped indentation (8), one or more recesses (9) which are bead-shaped and run obliquely between upper side and fitting side (22) of the wheelhouse body (2) .

4. Mudguard according to one of Claims 1, 2 or 3, **characterized in that** a step-shaped offset (20) surrounding a trough-shaped indentation (8) runs in a curved shape, in particular in a semi-annular manner, in the horizontal plane.

5. Mudguard according to one of Claims 1 to 4, **characterized in that** a trough-like indentation (8) in the upper side of a wheelhouse body (2) has such a planar extension that said indentation overlaps a contact zone between a vehicle wheel (30) and the wheelhouse body (2) when a vehicle wheel (30) is completely deflected.

6. Mudguard according to one of the preceding claims, **characterized in that** the mudguard (1) has a wheelhouse body (2) with an insert element (4) which is designed as a tread element (5) or as a cover panel (6).

7. Mudguard according to one of Claims 1 to 6, **characterized in that** the insert element (4, 5, 6) has an angled shape with a first surface part (16, 25) which can be placed into the trough-like indentation (8), and with a further surface element (17) which can be placed into the recess (24).

8. Mudguard according to one of the preceding claims, **characterized in that** the wheelhouse body (2) is designed for the joint fastening with the insert element (4) to a vehicle (29).

9. Mudguard according to one of the preceding claims, **characterized in that** one or more fixing receptacles (26) for receiving fixing elements (14), in particular latching lugs, of an insert element (4) are arranged in a fitting-side wall (23) of the wheelhouse body (2).

10. Mudguard according to one of Claims 7 to 9, **characterized in that** the surface part (16, 25) has a border (21) which corresponds with the offset (20) of the indentation (8) in a partial or complete supplement of the contour.

11. Mudguard according to one of Claims 7 to 10, **characterized in that** the lower side and optionally the upper side of the surface part (16, 25) has one or more elongate elevations or depressions (15), wherein the elevations or depressions (15) on the lower side correspond with one or more elevations or depressions (10) in the trough-shaped indentation (8) of the wheelhouse body (2) in a partial or complete supplement of the contour.

12. Mudguard according to one of Claims 7 to 11, **characterized in that** lug- and pocket-like connecting elements (27, 28) which can be plugged one inside the other in a form-fitting manner are arranged on the border region (21) of the surface part (16, 25) and of the indentation (8).

13. Mudguard according to one of Claims 6 to 12, **characterized in that** a tread element (5) has a surface part (16) designed as a tread region and a surface element (17) designed as a supporting surface, between which surface part and surface element one or more preferably bead-like support elements (7) are arranged for transmitting forces and torques between tread region (16) and supporting surface (17), wherein the one or more support elements (7) of the tread element (5) correspond with one or more oblique recesses (9) of the wheelhouse body (2) in a partial or complete supplement of the contour.

14. Mudguard according to one of Claims 1 to 13, **characterized in that** at least one elongate elevation or depression (10) covers the trough-shaped indentation (8) and, in a rectilinear direction, adjoins or merges into a further elongate elevation or depression (10) which runs in a surface of the wheelhouse body (2) adjoining in the direction or circumferential rotation of a vehicle wheel.

## Revendications

1. Aile à monter sur des véhicules, en particulier sur des remorques de voitures, des camions ou des remorques de camions, avec un corps de passage de roue (2) destiné à recouvrir une ou plusieurs roues (30) du véhicule, dans laquelle le corps de passage de roue (2) présente un côté supérieur et à côté de celui-ci une paroi (23) prévue du côté de montage (22) pour la fixation à un élément porteur (13) du véhicule, dans laquelle le corps de passage de roue (2) présente extérieurement sur son côté supérieur un logement (8) et sur sa paroi (23) du côté de montage (22) un évidement (24) pour l'agencement d'un élément rapporté (4) et dans lequel l'évidement (24) s'étend vers le bas à partir de l'arête entre le côté supérieur et le côté de montage (22) du corps de passage de roue (2) et est configuré sous la forme d'une région du corps de passage de roue (2) étagée en retrait par rapport au plan de montage.

2. Aile selon la revendication 1, **caractérisée en ce que** le logement (8) est configuré en forme de creux de type cuvette (8) sur le côté supérieur et est ouvert en direction horizontale vers le côté de montage (22) et forme en direction des autres côtés un retrait (20) étagé en section transversale.

3. Aile selon une des revendications 1 ou 2, **caractérisée en ce que** le corps de passage de roue (2) présente, dans la région d'une arête d'un creux de type cuvette (8) dirigée vers le côté de montage (22), un ou plusieurs dégagements (9) en forme de moulures et s'étendant en oblique entre le côté supérieur et le côté de montage (22) du corps de passage de roue (2).

4. Aile selon l'une quelconque des revendications 1, 2 ou 3, **caractérisée en ce qu'**un retrait étagé (20) entourant un creux de type cuvette (8) s'étend dans un plan horizontal en forme d'arc, en particulier en forme de demi-anneau.

5. Aile selon l'une quelconque des revendications 1 à 4, **caractérisée en ce qu'**un creux de type cuvette (8) dans le côté supérieur d'un corps de passage de roue (2) présente une extension de surface telle que, lors d'un enfoncement complet d'une roue du véhicule (30), il recouvre une zone de contact entre une roue du véhicule (30) et le corps de passage de roue (2).

6. Aile selon l'une quelconque des revendications précédentes, **caractérisée en ce que** l'aile (1) présente un corps de passage de roue (2) avec un élément rapporté (4), qui est réalisé en forme d'élément de marchepied (5) ou de plaque de recouvrement (6).

7. Aile selon l'une quelconque des revendications 1 à 6, **caractérisée en ce que** l'élément rapporté (4, 5, 6) présente une forme coudée avec une première partie plate (16, 25) insérable dans le creux de type cuvette (8) et avec un autre élément plat (17) insérable dans l'évidement (24).

8. Aile selon l'une quelconque des revendications précédentes, **caractérisée en ce que** le corps de passage de roue (2) est configuré en vue de la fixation commune avec l'élément rapporté (4) à un véhicule (29).

9. Aile selon l'une quelconque des revendications précédentes, **caractérisée en ce qu'**un ou plusieurs logements de fixation (26) sont agencés dans une paroi (23) du corps de passage de roue (2) du côté de montage, pour le logement d'éléments de fixation (14), en particulier d'ergots d'encliquetage, d'un élément rapporté (4).

10. Aile selon l'une quelconque des revendications 7 à 9, **caractérisée en ce que** la partie plate (16, 25) comporte un bord (21), qui correspond au retrait (20) du creux (8) en complétant partiellement ou entièrement le contour.

11. Aile selon l'une quelconque des revendications 7 à 10, **caractérisée en ce que** la partie plate (16, 25) présente sur son côté inférieur et éventuellement sur son côté supérieur une ou plusieurs surélévations ou dépressions allongées (15), dans laquelle les surélévations ou les dépressions (15) sur le côté inférieur correspondent à une ou plusieurs surélévations ou dépressions (10) dans le creux de type cuvette (8) du corps de passage de roue (2), en complétant partiellement ou entièrement le contour.

12. Aile selon l'une quelconque des revendications 7 à 11, **caractérisée en ce que** des éléments d'assemblage (27, 28), en forme d'ergots et de pochettes, à engager les uns dans les autres par emboîtement, sont agencés sur la région de bord (21) de la partie plate (16, 25) et du creux (8).

13. Aile selon l'une quelconque des revendications 6 à 12, **caractérisée en ce qu'**un élément de marchepied (5) présente une partie plate (16) configurée en zone de marche et un élément plat (17) configuré en surface d'appui, entre lesquels un ou plusieurs éléments d'appui (7) de préférence en forme de moulures, sont agencés pour la transmission de forces et de couples entre la zone de marche (16) et la surface d'appui (17), dans laquelle le ou les plusieurs éléments d'appui (7) de l'élément de marchepied (5) correspondent à un ou plusieurs dégagements obliques (9) du corps de passage de roue (2), en complétant partiellement ou entièrement le contour.

14. Aile selon l'une quelconque des revendications 1 à 13, **caractérisée en ce qu'**au moins une surélévation ou dépression allongée (10) recouvre le creux de type cuvette (8) et se raccorde à une autre surélévation ou dépression allongée (10), qui s'étend dans une surface du corps de passage de roue (2) adjacente dans la direction du sens de rotation d'une roue du véhicule, ou elle se prolonge dans celle-ci.
